# FASCICULE DE BREVET EUROPEEN

(11) **EP 0 858 649 B1**
(45) Date de publication et mention de la délivrance du brevet: **23.07.2003**
(21) Numéro de dépôt: 96930190.2
(22) Date de dépôt: 30.08.1996
(51) Int. Cl.: G10H 1/32

(54) **PIANO ELECTRONIQUE PLIABLE PORTATIF**
FALTBARES TRAGBARES ELEKTRONISCHES KLAVIER
PORTABLE FOLDABLE ELECTRONIC PIANO

(43) Date de publication de la demande: 19.08.1998
(73) Titulaire: Parienti, Raoul, 06000 Nice (FR)
(72) Inventeur: Parienti, Raoul, 06000 Nice (FR)
(74) Mandataire: Bonneau, Gérard
(86) Numéro de dépôt international: FR9601335
(87) Numéro de publication internationale: WO97008681

(56) Documents cités:
- EP-A- 0 406 773
- WO-A-93/02438
- DE-U- 9 208 106
- US-A- 4 352 310
- US-A- 4 936 185
- US-A- 5 159 141

## Description

Si le monde de la musique est riche de plaisirs, il exige toutefois du musicien une pratique régulière et assidue. Un pianiste par exemple, même amateur, doit s'entraîner quasiment tous les jours pour conserver la souplesse des doigts et la parfaite maîtrise du clavier.

Or, s'il est possible pour le joueur d'harmonica, voire de violon, de transporter son instrument préféré, pour le pianiste un vrai problème se pose.

Certes, on a vu apparaître des claviers électroniques plus faciles à transporter, mais les modèles existants sont encore encombrants bien que disposant d'un clavier de quatre à cinq octaves seulement.

Par exemple, le brevet D-E-92 08 106, décrit un clavier capable de s'articuler en deux parties, permettant ainsi un transport plus aisé, mais il s'agit encore d'un clavier aux caractéristiques (poids, dimensions, mode de fonctionnements), en tous points identiques aux claviers existants ne disposant généralement que de cinq octaves.

L'invention présentée dans la présente demande de brevet permet de remédier à tous ces inconvénients.

L'objet de l'invention est donc un clavier de piano ultra léger, pliable et dépliable et de dimensions comparables à ceux d'un livre, donc aisément portable.

Les dimensions réduites et le faible poids du clavier en font un instrument réellement portatif, permettant au pianiste de l'emporter systématiquement dans sa serviette ou cartable afin de s'entraîner régulièrement.

Le clavier est formé, par exemple de 4 modules solidarisés par une membrane souple, chaque module reproduisant les touches d'un piano par un léger relief. Pour réduire l'encombrement et le poids, les touches blanches (1) et les touches noires (2) constituants chaque module (9), sont réalisées selon une faible épaisseur, mais forment cependant le clavier d'un vrai piano, les touches noires (2) pour les demi-tons, sont également réalisées en sur-épaisseur pour une bonne ergonomie. Chaque touche est séparée par une petite fente qui permet de bien les distinguer. Chacun des quatre modules peut être monobloc ou au contraire constitué de touches indépendantes et séparées par un espace.

En effet, l'objet de l'invention est un clavier portatif pliable ultra-léger, au format réel d'un clavier piano, intégrant donc 7 octaves, permettant un entraînement aisé en toute circonstance, car, une fois pliés, lesdits modules représentent le volume d'un livre, et une fois dépliés, ils constituent un véritable clavier de piano.

Lorsque l'on frappe sur ces touches, le son du piano sera reproduit grâce à un écouteur individuel ; ainsi sous chaque touche il y a un contact de type piézo-électrique. L'invention sera conçue de telle sorte que la simple pose d'un doigt sur le clavier ne provoque pas de son, mais le son n'est restitué que lorsque l'on frappe les touches (1) et (2) du clavier. Ainsi, il sera utile de calibrer la déformation des touches pour déclencher le générateur de son.

Chaque touche est reliée à un contact, l'ensemble de ces contacts est relié vers une unité électronique composée d'un synthétiseur de son, à chaque touche correspondra, bien entendu, l'équivalent d'un son de piano.

Ledit son peut être, soit numérisé à partir du son d'un véritable piano et mémorisé dans une mémoire ad hoc, soit encore reproduit par un synthétiseur.

Pour réduire l'encombrement et le poids, le piano objet de l'invention est typiquement dépourvu de haut-parleur et de circuits d'amplification sonore, seul un préampli associé au synthétiseur, alimente un casque d'écoute stéréo.

Deux prises de casque d'écoute sont disponibles afin que l'élève et le professeur puissent écouter en même temps.

L'objet de l'invention définit un clavier portatif qui, plié, n'est pas plus volumineux qu'un livre, et une fois déployé permet à tout à chacun et à faible coût de s'entraîner avec un instrument dont la sonorité est comparable à celle d'un véritable piano.

L'invention présente par ailleurs un avantage notable, en effet, grâce à un casque d'écoute, elle ne provoque aucun bruit pouvant gêner le voisinage tout en permettant au pianiste de poursuivre son entraînement, même en déplacement.

Selon l'un des modes de réalisation de l'invention, le clavier est composé de quatre modules (9) solidarisés entre eux par une membrane souple (34) résistante à l'écrouissage (fig. 10), telle que : caoutchouc, latex ou matière plastique.

Le clavier est constitué de touches blanches (1) et de touches noires (2) pour les demi-tons, à l'instar d'un véritable clavier de piano.

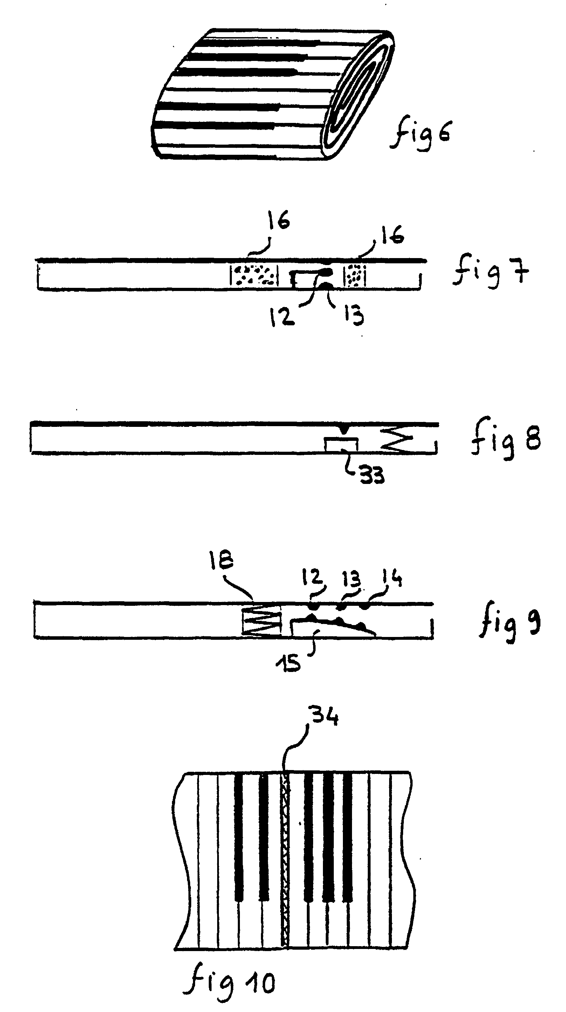

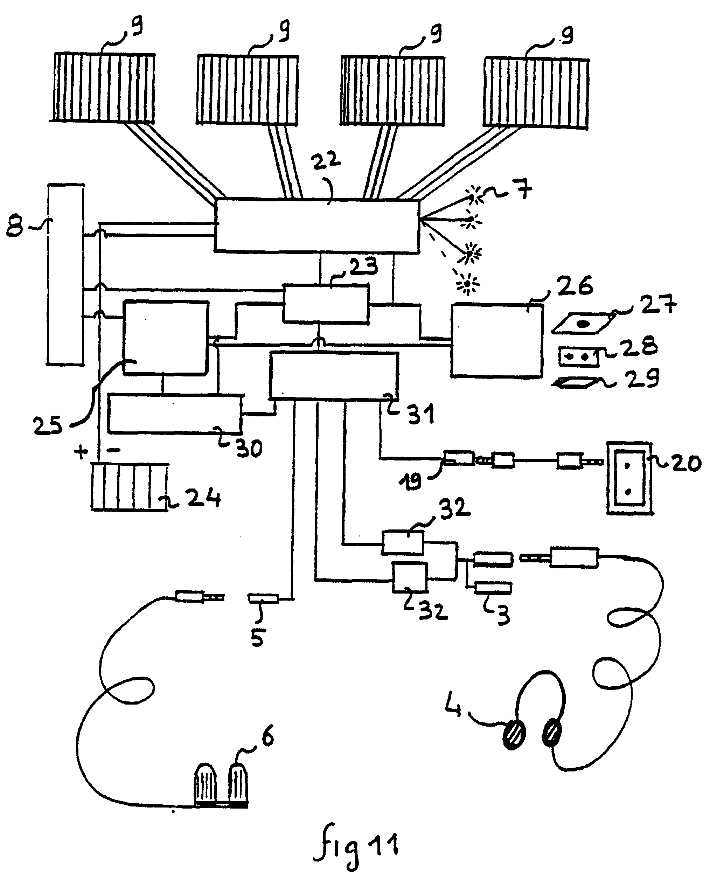

Sous chaque touche se trouve plusieurs contacts , deux contacts pour deux niveaux sonores possibles (fig. 7), trois contacts ou davantage pour trois niveaux de puissance sonore ou davantage (fig. 9). Les contacts peuvent être, soit dans l'axe vertical, soit selon un gabarit (15). Les touches sont repoussées par une mousse élastique (16) ou par un ressort (18), les contacts peuvent être à encre (de faible coût), capacitifs, résistifs, ou mieux piézo-électriques (33) (fig.8). Dans ce dernier cas, l'énergie mécanique variable de la frappe provoque un courant corrélatif capable de générer un grand nombre de nuances.

Chaque contact crée un signal, chaque signal est transmis à un conducteur électrique, l'ensemble de ces conducteurs est relié à une bande souple (21) qui est connectée à une logique câblée (22). Il est possible de manière analogique de limiter le nombre de conducteurs de ladite bande pour réduire les coûts du câblage.

Ladite bande souple (21) qui intègre les conducteurs, est connectée à un circuit de logique câblée (22), géré par microprocesseur (23). L'électronique est alimentée par des piles simples ou rechargeables (24), ou encore par une prise secteur via un transformateur. Les sons de piano à reproduire par la frappe des touches (1) et (2) sont des sons numérisés d'un véritable piano et mémorisés dans la mémoire (25).

Selon une autre version, les sons de piano peuvent également être reproduits grâce à un synthétiseur (26). Les signaux reproduisant les notes de piano sont ensuite amplifiés grâce à un préampli (31) et dirigés ensuite vers deux sorties casque (3).

L'effet stéréo droite/gauche est reproduit simplement par deux filtres (32) à pente progressive, l'un atténue les aigus pour le canal gauche, favorisant ainsi les basses, l'autre au contraire atténue les basses, favorisant ainsi les aigus pour le canal droit. Ce dispositif simple et peu coûteux, permet de restituer l'effet spatial d'un son de piano.

Une prise de pédales (5) permet de connecter une paire de pédales (6), l'effet des pédales est reproduit en agissant sur le préamplificateur, la pédale de droite permettant d'allonger le son, la pédale de gauche permettant de l'atténuer.

Le microprocesseur (23), gère un ensemble mémoire (25), constitué d'une mémoire ROM pour mémoriser les données fixes, telles que : l'ensemble des sons numérisés du piano et d'une mémoire RAM mémorisant par exemple les enregistrements des morceaux qui viennent d'être joués.

Il est à noter qu'il existe à ce jour des circuits spécifiques intégrant l'ensemble de l'électronique décrite, notamment des processeurs 32 voies polyphoniques.

Selon une version plus luxueuse de l'invention, celle-ci va intégrer une interface (26) de supports mémoires externes, tels que : disquettes (27), microcassettes (28) ou modules de mémoire enfichables (29), ces supports pouvant être acquis au fur et à mesure des besoins et pourront mémoriser des partitions, une méthode pour apprendre le piano etc.

Selon une version encore plus élaborée, l'invention comprend un écran (8) qui permet de communiquer des informations utiles à l'utilisateur et de visualiser le défilement d'une partition, l'ensemble des données étant mémorisé, soit en mémoire (25), soit encore dans les supports mémoire externes (27), (28), (29).

L'invention sera également pourvue de diodes électroluminescentes (7) qui s'éclairent lorsque besoin, pour indiquer par exemple au musicien la touche qu'il doit frapper. L'écran (8) est géré par le microprocesseur (23) et connecté à la mémoire (25) et à la logique câblée (22). L'ensemble des diodes électroluminescentes (7) est commandé par la logique câblée, les signaux de commande desdites diodes sont transmis par la bande souple (21) qui intègre les conducteurs.

L'invention peut également être pourvue d'une sortie destinée à être connectée à un amplificateur ou à une chaîne haute-fidélité, ainsi que d'une sortie de type « midi» pouvant connecter l'invention à un ordinateur.

Selon un mode de réalisation plus élaboré de l'invention, une prise femelle (19) peut recevoir les signaux acoustique d'un baladeur (20), un cordon de raccordement reliant la sortie casque du baladeur à la prise (19), les dits signaux étants exploités par le préampli (31) et mélangés aux sons du piano pour être diffusés par le casque (4), cette possibilité est utile pour une méthode d'apprentissage.

Selon une autre version, le clavier est entièrement souple et permet un pliage aisé sans articulation ou mieux s'enrouler sur lui même (fig. 6). Les circuits souples développés à ce jour permettent ce type de réalisation.

Selon un mode de réalisation de l'invention, le synthétiseur (26) peut être conçu pour reproduire les sonorités de plusieurs instruments.

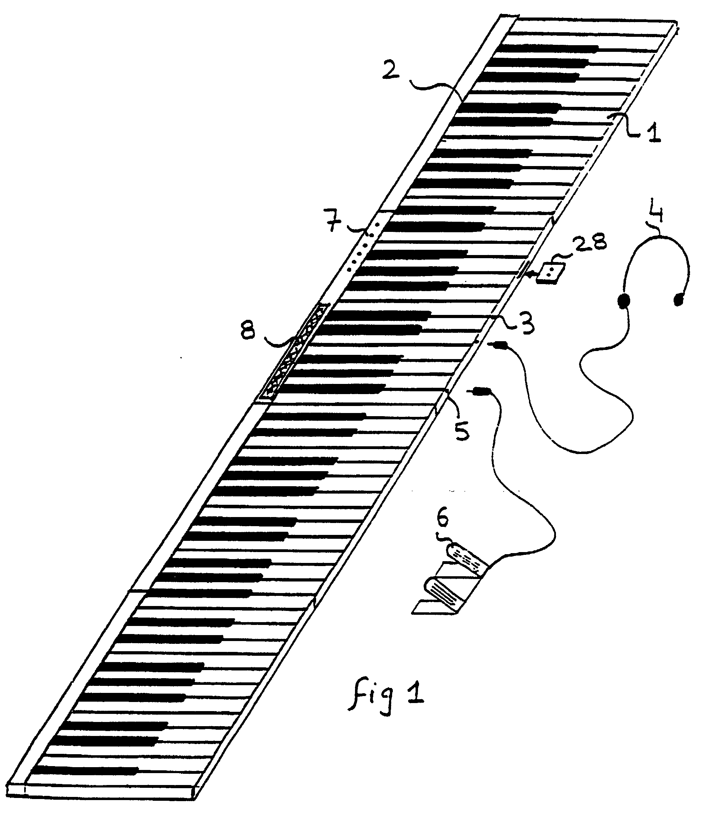

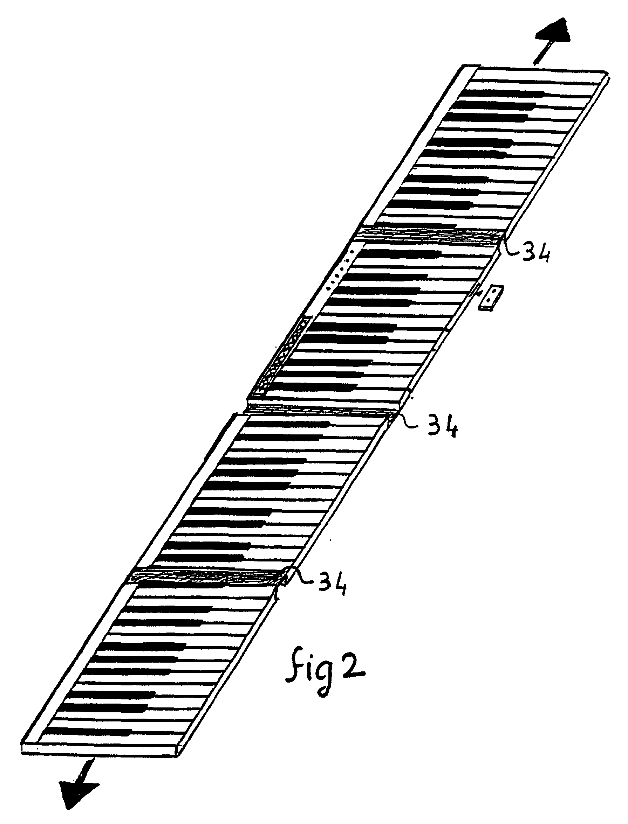

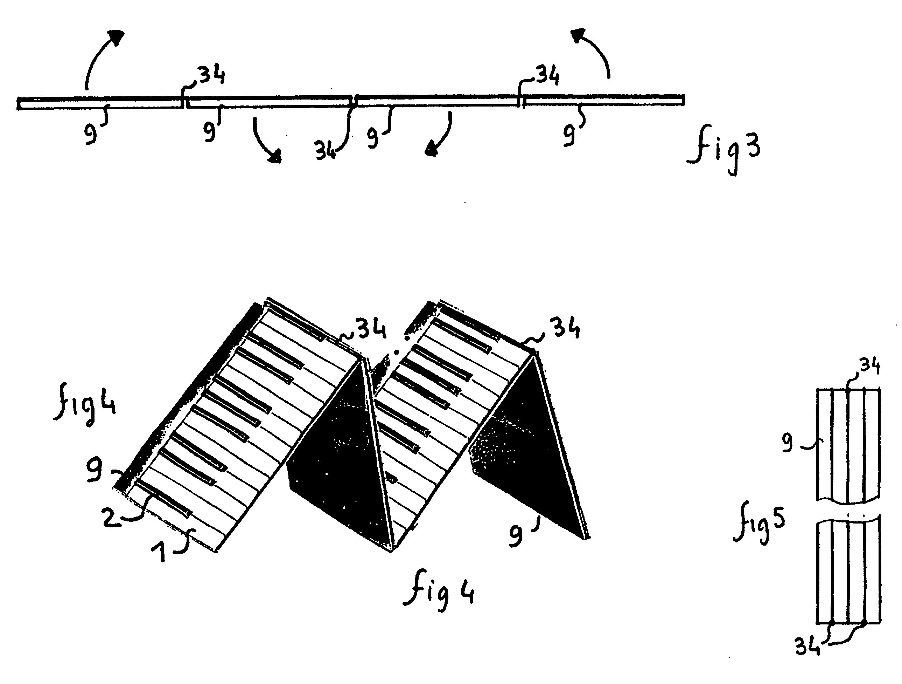

La figure 1 montre le clavier prêt à fonctionner ; la figure 2 montre une vue du clavier éclaté en 4 modules mettant en évidence la membrane souple (34) qui les solidarisent et qui apparaît sous l'effet d'une traction (flèches) ; la figure 3 montre une vue de coupe et l'un des l'un des modes de pliage possible ; la figure 4 montre le clavier en cours de pliage selon un mode de pliage différent ; la figure 5 montre le clavier plié schématisé.

L'intégration et l'association des différents éléments constitutifs de l'invention, permet de proposer au grand public comme au musicien, un nouveau moyen original et transportable, pour s'initier et s'entraîner au piano à faible coût et sans gêner le voisinage.

Les formes, dimensions et dispositions des différents éléments, ainsi que les matières utilisées pour la fabrication, telles que : papier durci, carton, matières plastiques, matériaux composites etc., pourront varier sans changer, pour cela la conception générale de l'invention qui vient d'être d'écrite.

## Revendications

1. Piano électronique pliable portatif composé de plusieurs modules (9), chaque module comprenant un ensemble de touches (1, 2) et d'une électronique capable de reproduire les notes de musique d'un piano, l'ensemble des modules (9), une fois déplié, représentant le clavier d'un véritable piano intégrant sept octaves, **caractérisé en ce que** :
- les modules (9) sont solidarisés entre eux par une membrane souple (34) résistante à l'écrouissage, et permettant le pliage et le dépliage de l'ensemble des modules, et que les contacts sont de type piézo-électrique (33) permettant à l'énergie mécanique variable de la frappe, de provoquer un courant corrélatif, capable de générer un grand nombre de nuances.

2. Piano électronique pliable portatif selon la revendication 1, **caractérisé en ce que** chaque module (9) reproduise les touches d'un piano avec un léger relief, avec des touches blanches (1) et des touches noires (2) réalisées en sur-épaisseur.

3. Piano électronique pliable portatif selon les revendications 1 et 2, **caractérisé en ce que** chaque touche (1) et (2) est séparée par une petite fente.

4. Piano électronique pliable portatif selon l'une quelconque des revendications précédentes, **caractérisé en ce que** le son est restitué lorsque l'on frappe les touches (1) et (2) du clavier grâce à un calibrage de la déformation du clavier.

5. Piano électronique pliable portatif selon l'une quelconque des revendications précédentes, **caractérisé en ce que** sur chaque touche (1) et (2) se trouve un contact (12), à encre, résistif ou capacitif dont la stimulation provoque une puissance de son constant de type tout ou rien.

6. Piano électronique pliable portatif selon l'une quelconque des revendications précédentes, **caractérisé en ce que** sur chaque touche se trouve plusieurs contacts (12), (13), (14) pouvant restituer ainsi plusieurs niveaux de puissance sonore.

7. Piano électronique pliable portatif selon l'une quelconque des revendications précédentes, **caractérisé en ce que** les contacts (12), (13) et (14) sont situés selon un gabarit (15).

8. Piano électronique pliable portatif selon l'une quelconque des revendications précédentes, **caractérisé en ce que** les sons de piano reproduits par la frappe des touches (1) et (2) sont des sons numérisés d'un véritable piano et mémorisés dans la mémoire (25).

9. Piano électronique pliable portatif selon l'une quelconque des revendications précédentes, **caractérisé en ce que** les notes de piano sont amplifiées grâce à un préamplificateur (31) et dirigées vers deux sorties casque (3).

10. Piano électronique pliable portatif selon l'une quelconque des revendications précédentes, **caractérisé en ce que** l'effet stéréo droite/gauche est reproduit par deux filtres (32) à pente progressive, l'un atténue les aigus pour le canal gauche favorisant ainsi les basses, l'autre au contraire atténue les basses favorisant ainsi les aigus pour le canal droit.

11. Piano électronique pliable portatif selon l'une quelconque des revendications précédentes, **caractérisé en ce que** l'invention dispose d'une interface (26) de supports mémoires externes, tels que : disquettes (27), microcassettes (28) ou modules mémoire enfichables (29).

12. Piano électronique pliable portatif selon l'une quelconque des revendications précédentes, **caractérisé en ce que** l'invention comprend un écran (8) qui permet de visualiser le défilement d'une partition, l'ensemble des données étant mémorisé, soit en mémoire (25), soit encore dans les supports mémoire externes (27), (28) et (29).

13. Piano électronique pliable portatif selon l'une quelconque des revendications précédentes, **caractérisé en ce que** l'invention est pourvue de diodes électroluminescentes (7) qui s'éclairent lorsque besoin.

14. Piano électronique pliable portatif selon l'une quelconque des revendications précédentes, **caractérisé en ce que** le clavier est entièrement souple et permet un pliage aisé sans articulation ou permet de s'enrouler sur lui même grâce à l'utilisation des circuits souples.

15. Piano électronique pliable portatif selon la revendication 9, **caractérisé en ce que** une prise femelle (19) peut recevoir les signaux acoustiques d'un baladeur (20), lesdits signaux étant exploités par le préamplificateur (31) et mélangés aux sons générés par le piano pour être diffusés par le casque (4).

## Patentansprüche

1. Zusammenfaltbares tragbares elektronisches Klavier, bestehend aus mehreren Modulen (9), deren jedes eine Gruppe von Tasten (1, 2) aufweist, und aus einer Elektronik, die die Musiktönen eines Klaviers reproduzieren kann, wobei die Gesamtheit der Module (9) im entfalteten Zustand die Tastatur eines echten Klaviers mit sieben Oktaven darstellt, **dadurch gekennzeichnet, daß**
- die Module (9) miteinander durch eine biegsame, härtungsbeständige Membran (34) fest verbunden sind, die das Zusammenfalten und Entfalten der Einheit der Module gestattet, und daß die Kontakte piezoelektrische Kontakte (33) sind, die es gestatten, daß die veränderliche mechanische Energie des Anschlags einen korrelativen Strom erzeugt, der eine große Anzahl von Nuancen erzeugen kann.

2. Zusammenfaltbares tragbares elektronisches Klavier nach Anspruch 1, **dadurch gekennzeichnet, daß** jedes Modul (9) die Tasten eines Klaviers mit einem leichten Relief mit weißen Tasten (1) und schwarzen Tasten (2) darstellt, die als Überdicke ausgeführt sind.

3. Zusammenfaltbares tragbares elektronisches Klavier nach den Ansprüche 1 und 2, **dadurch gekennzeichnet, daß** jede Taste (1) und (2) durch einen kleinen Spalt getrennt ist.

4. Zusammenfaltbares tragbares elektronisches Klavier nach einem der vorhergehenden Ansprüche, **dadurch gekennzeichnet, daß** der Ton dank einer Kalibrierung der Verformung der Tastatur wiedergegeben wird, wenn man die Tasten (1) und (2) der Tastatur anschlägt.

5. Zusammenfaltbares tragbares elektronisches Klavier nach einem der vorhergehenden Ansprüche, **dadurch gekennzeichnet, daß** sich auf jeder Taste (1) und (2) ein Kontakt (12), ein Tintenkontakt, ein resistiver oder ein kapazitiver Kontakt, befindet, dessen Erregung eine konstante Lautstärke vom Typ Ein-Aus bewirkt.

6. Zusammenfaltbares tragbares elektronisches Klavier nach einem der vorhergehenden Ansprüche, **dadurch gekennzeichnet, daß** an jeder Taste mehrere Kontakte (12), (13), (14) vorgesehen sind, die auf diese Weise mehrere Lautstärken wiedergeben können.

7. Zusammenfaltbares tragbares elektronisches Klavier nach einem der vorhergehenden Ansprüche, **dadurch gekennzeichnet, daß** die Kontakte (12), (13) und (14) nach einem Profil (15) angeordnet sind.

8. Zusammenfaltbares tragbares elektronisches Klavier nach einem der vorhergehenden Ansprüche, **dadurch gekennzeichnet, daß** die durch das Anschlagen der Tasten (1) und (2) reproduzierten Klaviertöne digitalisierte Töne eines echten Klaviers sind, die in dem Speicher (25) gespeichert sind.

9. Zusammenfaltbares tragbares elektronisches Klavier nach einem der vorhergehenden Ansprüche, **dadurch gekennzeichnet, daß** die Klaviertöne durch einen Vorverstärker (31) verstärkt werden und zwei Kopfhörerausgängen (3) zugeleitet werden.

10. Zusammenfaltbares tragbares elektronisches Klavier nach einem der vorhergehenden Ansprüche, **dadurch gekennzeichnet, daß** der Rechts/Links-Stereoeffekt durch zwei Filter (32) mit progressiver Neigung reproduziert wird, deren eines die hohen Töne für den linken Kanal dämpft und auf diese Weise die tiefen Töne begünstigt und deren anderes dagegen für den rechten Kanal die tiefen Töne dämpft und auf diese Weise die hohen Töne begünstigt.

11. Zusammenfaltbares tragbares elektronisches Klavier nach einem der vorhergehenden Ansprüche, **dadurch gekennzeichnet, daß** die Erfindung über eine Schnittstelle (26) für externe Speicherträger, wie Disketten (27), Mikrokassetten (28) oder einsteckbare Speichermodule (29), verfügt.

12. Zusammenfaltbares tragbares elektronisches Klavier nach einem der vorhergehenden Ansprüche, **dadurch gekennzeichnet, daß** die Erfindung einen Bildschirm (8) aufweist, der die Sichtdarstellung des Ablaufs von Musiknoten gestattet, wobei die Gesamtheit der Daten entweder in einem Speicher (25) oder in den externen Speicherträgern (27), (28) und (29) gespeichert sind.

13. Zusammenfaltbares tragbares elektronisches Klavier nach einem der vorhergehenden Ansprüche, **dadurch gekennzeichnet, daß** die Erfindung mit Elektrolumineszenzdioden (7) versehen ist, die im Bedarfsfall aufleuchten.

14. Zusammenfaltbares tragbares elektronisches Klavier nach einem der vorhergehenden Ansprüche, **dadurch gekennzeichnet, daß** die Tastatur vollständig biegsam ist und dank der Verwendung von biegsamen Schaltkreisen ohne Gelenk leicht gefaltet werden kann oder zusammengerollt werden kann.

15. Zusammenfaltbares tragbares elektronisches Klavier nach Anspruch 9, **dadurch gekennzeichnet, daß** eine Steckbuchse (19) die Tonsignale eines Walkmans (20) empfangen kann, die durch den Vorverstärker (31) ausgewertet werden und mit den durch das Klavier erzeugten Tönen gemischt werden, um von dem Kopfhörer (4) verbreitet zu werden.

## Claims

1. A portable foldable electronic piano composed of several modules (9), each module comprising a plurality of keys (1,2) and electronics capable of reproducing the notes of a piano, the whole set of modules (9), once unfolded, representing the keyboard of a real piano with seven octaves, **characterized in that**:
the modules (9) are made interdependent each other by means of a flexible membrane (34) that can mechanically withstand the strains produced by folding/unfolding operations, and **in that** the contacts use a piezoelectric technology (33) that enables to transform the variable mechanical energy of the hit into a correlative current capable of generating a plurality of nuances.

2. The portable foldable electronic piano according to claim 1, **characterized in that** each module (9) reproduces the keys of a piano in the form of a slight raised pattern, with white keys (1) and embossed black keys(2).

3. The portable foldable electronic piano according to claim 1 or 2, **characterized in that** each key (1) and (2) is spaced out from the other ones by a small slot.

4. The portable foldable electronic piano according to any one of previous claims, **characterized in that** the sound is rendered when hitting the keys (1) and (2) of the keyboard by means of a calibration of the keyboard distortion.

5. The portable foldable electronic piano according to any one of previous claims, **characterized in that** under each key (1) and (2) there is a contact (12) using ink, resistive or capacitive technology, whose stimulation generates an "all-or-nothing" constant power sound.

6. The portable foldable electronic piano according to any one of previous claims, **characterized in that** each key has several contacts (12), (13), (14) meant for rendering several sound power levels.

7. The portable foldable electronic piano according to any one of previous claims, **characterized in that** the contacts (12), (13), (14) are arranged along a template (15).

8. The portable foldable electronic piano according to any one of previous claims, **characterized in that** the piano sounds reproduced when hitting the keys (1) and (2) are digitized sounds from a real piano and are stored into the memory (25).

9. The portable foldable electronic piano according to any one of previous claims, **characterized in that** the piano keys are amplified by means of an preamplifier (31) and distributed to two headphones sockets (3).

10. The portable foldable electronic piano according to any one of previous claims, **characterized in that** the right/left stereo effect is achieved by means of two progressive ramp filters (32) wherein one filter softens the treble for the left channel, thus giving priority to the bass, and the other one, on the contrary, reduces the bass, thus giving priority to the treble for the right channel.

11. The portable foldable electronic piano according to any one of previous claims, **characterized in that** the invention has an interface (26) for external memory devices such as disks (27), microcassettes (28) or plug-in memory modules (29).

12. The portable foldable electronic piano according to any one of previous claims, **characterized in that** the invention comprises a screen (8) for seeing the scrolling of a score, the whole data being stored either into the memory (25), or into the external memory devices (27), (28), (29).

13. The portable foldable electronic piano according to any one of previous claims, **characterized in that** the invention is provided with LEDs (7) that light up as needed.

14. The portable foldable electronic piano according to any one of previous claims, **characterized in that** the keyboard is fully flexible and enables an easy folding without joint or is capable of being wound on itself thanks to the use of flexible circuits.

15. The portable foldable electronic piano according to claim 9, **characterized in that** a female socket (19) can receive the acoustical signals from a personal stereo (20), said signals being managed by the preamplifier (31) and mixed with the sounds generated by the piano to be broadcast by the headphones (4).
